# EUROPEAN PATENT APPLICATION

(11) **EP 4 585 301 A1**
(43) Date of publication of application: **16.07.2025**
(21) Application number: 23893395.6
(22) Date of filing: 21.09.2023
(51) Int. Cl.: B01F 27/27, B01F 23/50

(54) **MULTILAYER SERIES-CONNECTED AXIAL-FLOW TYPE PASTE DISPERSING DEVICE AND POWDER-LIQUID MIXING DEVICE**

(30) Priority: 23.11.2022 CN 202223109247 U
(71) Applicant: Wuxi Rich Intelligent Equipment Co., Ltd., Wuxi, Jiangsu 214000 (CN)
(72) Inventor: ZHU, Hongliang, Wuxi, Jiangsu 214000 (CN); MA, Zhengguang, Wuxi, Jiangsu 214000 (CN); LIU, Zhen, Wuxi, Jiangsu 214000 (CN)
(74) Representative: Fidal Innovation
(86) International application number: PCT/CN2023/120248
(87) International publication number: WO 2024/109302

(57) **Abstract**

Disclosed in the present invention are a multilayer series-connected axial-flow type paste dispersing device and a powder-liquid mixing device. Dispersing rotors and dispersing stators in a plurality of layers are provided in a housing, the dispersing rotors and the dispersing stators being stacked in the axial direction; the dispersing rotors each have a thick inner part and a thin outer part, while the dispersing stators each have a thick outer part and a thin inner part; rotor dispersing rings and stator dispersing rings are alternately arranged, the rotor dispersing rings extending into rotor ring accommodating slots, and the stator dispersing rings extending into stator ring accommodating slots. In the present invention, flow pass-through holes of the dispersing rotors and of the dispersing stators are communicated in the axial direction; in a dispersing structure, a liquid paste simply needs to flow in an axial flow channel from bottom to top without being diverted, thereby realizing a short paste flow distance, low flow resistance, smooth flowing, low flow loss, high efficiency, and low energy consumption; in addition, when the paste flows through the flow pass-through holes in the axial direction from bottom to top, flow rates and velocities at each portion of the flow pass-through holes are kept consistent, thereby ensuring the consistent dispersing effect of dispersing areas, realizing more uniform dispersion and the better dispersing effect, and more helping to improve the energy utilization rate.

## Description

### FIELD OF TECHNOLOGY

The present invention relates to the field of slurry dispersing technologies, and in particular, to a multilayer series axial-flow type slurry dispersing device and a powder-liquid mixing device.

### BACKGROUND

A powder-liquid mixing device usually has a slurry dispersing device for dispersing slurry and then feeding the slurry into a powder-liquid mixing area for mixing with powder.

The slurry dispersing device in the existing powder-liquid mixing device usually performs dispersion in a radial flow mode; that is, the slurry radially flows between pass-through holes of stators and rotors, and alternatively flows through a plurality of inner flow channels and outer flow channels in a diverted mode in the dispersing device to realize sufficient dispersion. The dispersing device has a long flow distance of the slurry, requires multiple diversions, and thus has a high flow resistance, insufficiently smooth flowing, large flow loss, low efficiency, and large energy consumption.

### SUMMARY

In order to overcome the above defects of the existing slurry dispersing device, the applicant provides a multilayer series axial-flow type slurry dispersing device and a powder-liquid mixing device having reasonable structures, which realize a short flow distance, low flow resistance, high efficiency, and small energy consumption of slurry.

The following technical solution is adopted in the present invention:
a multilayer series axial-flow type slurry dispersing device, wherein one or more layers of dispersing rotor and dispersing stator are provided in a housing, the dispersing rotor and the dispersing stator are stacked in an axial direction, the dispersing rotor is sleeved on a main shaft, the dispersing stator is connected to the housing, and the dispersing rotor is rotatably fitted with the dispersing stator; the dispersing rotor has a thick inner part and a thin outer part and comprises a rotor connecting ring at the thick inner part and a rotor dispersing ring at the thin outer part, a stator ring accommodating groove is formed in an outer side of the rotor connecting ring and above or below the rotor dispersing ring, and one or more rotor flow pass-through holes are formed in the rotor dispersing ring; the dispersing stator has a thick outer part and a thin inner part and comprises a stator connecting ring at the thick outer part and a stator dispersing ring at the thin inner part, a rotor ring accommodating groove is formed in an inner side of the stator connecting ring and below or above the stator dispersing ring, and one or more stator flow pass-through holes are formed in the stator dispersing ring; the rotor dispersing ring and the stator dispersing ring are spaced apart, the rotor dispersing ring extends into the rotor ring accommodating groove, and the stator dispersing ring extends into the stator ring accommodating groove.

As a further improvement of the above technical solution:
the dispersing rotors or the dispersing stators abut layer by layer, and the dispersing rotor in each layer are arranged on inner sides of the dispersing stator in the corresponding layer; a thickness of the stator dispersing ring is less than a depth of the stator ring accommodating groove, and a thickness of the rotor dispersing ring is less than a depth of the rotor ring accommodating groove.

A radial width of the rotor dispersing ring is consistent with a radial width of the stator dispersing ring; a thickness of the rotor dispersing ring is about 1/10 to 9/10 of a thickness of the rotor connecting ring; a thickness of the stator dispersing ring is about 1/10 to 9/10 of a thickness of the stator connecting ring.

The rotor flow pass-through holes and the stator flow pass-through holes are obround holes; all the rotor flow pass-through holes and/or all the stator flow pass-through holes are arranged concentrically or eccentrically.

An included angle α between an extension line of centers of circular arc portions on two sides of each rotor flow pass-through hole and a radial line passing through a center of the circular arc portion on an outer side thereof ranges from 0 degrees to 90 degrees; an included angle β between an extension line of centers of circular arc portions on two sides of the stator flow pass-through hole and a radial line passing through a center of the circular arc portion on an outer side thereof ranges from 0 degrees to 90 degrees.

The rotor flow pass-through holes and/or the stator flow pass-through holes are configured as straight holes or inclined holes.

An inner wall surface of the housing is provided with a support ring, and one dispersing stator in a bottommost layer abuts against the support ring.

A liquid inlet cavity is arranged in a bottom in the housing, a liquid outlet cavity is arranged in a top in the housing, and a liquid inlet communicated with the liquid inlet cavity is arranged on a wall surface of the housing.

Disclosed is a powder-liquid mixing device, in which the above multilayer series axial-flow type slurry dispersing device is adopted, wherein a mixing sleeve is connected to a top surface of the housing, a mixing cavity is arranged in the mixing sleeve, the mixing cavity is communicated with a liquid outlet cavity, a mixed material outlet communicated with the mixing cavity is arranged in the mixing sleeve, a mixing impeller is arranged in the mixing cavity of the mixing sleeve, the mixing impeller sleeves the main shaft, a powder inlet cylinder is connected to a top of the mixing sleeve, a powder inlet cavity is arranged in the powder inlet cylinder, and the powder inlet cavity is communicated with the mixing cavity.

As a further improvement of the above technical solution:
a vertical convex ring is arranged on a bottom surface of the powder inlet cylinder, one or more discharge holes are arranged in a wall surface of the vertical convex ring, and the vertical convex ring is sleeved on the mixing impeller.

The present invention has the following beneficial effects.

In the present invention, the flow pass-through hole in the dispersing rotor and the flow pass-through holes in the dispersing stator are communicated with each other in the axial direction; within the dispersing structure, a liquid slurry only needs to flow in an axial flow channel from bottom to top without being diverted, thereby realizing a short flow distance, low flow resistance, smooth flowing, low flow loss, high efficiency, and low energy consumption of the slurry; in addition, when the slurry flows through the flow pass-through holes in the axial direction from bottom to top, flow rates and velocities at each portion of the flow pass-through holes are kept consistent, thereby ensuring the consistent dispersing effect of dispersing areas, realizing more uniform dispersion and the better dispersing effect, and more helping to improve the energy utilization rate. Each of the dispersing rotor and the dispersing stator has a structure with a thick connecting ring and a thin dispersing ring; on the one hand, the thick connecting ring can improve connecting strength to make a connection more stable and reliable, and the thin dispersing ring is beneficial to reducing the flow resistance of the liquid slurry, thereby improving the efficiency and reducing the energy consumption; on the other hand, the dispersing rotor and the dispersing stator have thick connecting rings and thin dispersing rings, and the accommodating grooves for accommodating the dispersing rings are directly formed in outer sides or inner sides of the connecting rings of the dispersing rotors and the dispersing stators, such that the dispersing rotors or the dispersing stators can abut layer by layer through the connecting rings of the thick parts, the dispersing rotor in each layer are arranged on the inner sides of the dispersing stator in a corresponding layer, and the accommodating grooves are not required to be defined through additional spacing rings, thus omitting the spacing rings, making the structure simpler and more compact, and also saving an element cost; the dispersing rotors or the dispersing stators abut layer by layer, which is also beneficial to improving support strength to make the connection more stable and reliable.

In the present invention, the radial width of the rotor dispersing rings of the dispersing rotor in each layer is consistent with the radial width of the stator dispersing rings of the dispersing stator in each layer, such that the dispersing area between the stators and the rotors can be utilized to the maximum extent to maximize the energy utilization rate.

In the present invention, the dispersing stators abut against the support ring, and the support ring positions and supports the dispersing stators, thereby improving the support strength.

In the present invention, the vertical convex ring is sleeved on the mixing impeller, such that the liquid slurry and powder can be blocked on an inner side of the vertical convex ring, are stirred and mixed by the rotating mixing impeller and then flow out through the discharge hole, resulting in more sufficient mixing and a better mixing effect.

### BRIEF DESCRIPTION OF THE DRAWINGS

FIG. 1 is a schematic structural diagram according to the present invention.
FIG. 2 is a perspective sectional view of a dispersing structure in the present invention.
FIG. 3 is a schematic structural diagram with concentric flow pass-through holes.
FIG. 4 is a schematic structural diagram with eccentric flow pass-through holes.
FIG. 5 is a schematic sectional diagram of fitting of the flow pass-through holes which are straight holes.
FIG. 6 is a schematic sectional diagram of fitting of the flow pass-through holes which are inclined holes.

In the drawings: 1 - housing; 11 - liquid inlet cavity; 12 - liquid outlet cavity; 13 - liquid inlet; 14 - support ring; 2 - main shaft; 3 - dispersing rotor; 31 - rotor connecting ring; 32 - rotor dispersing ring; 33 - rotor flow pass-through hole; 34 - stator ring accommodating groove; 4 - dispersing stator; 41 - stator connecting ring; 42 - stator dispersing ring; 43 - stator flow pass-through hole; 44 - rotor ring accommodating groove; 5 - mixing sleeve; 51 - mixing cavity; 52 - mixed material outlet; 6 - mixing impeller; 7 - powder inlet cylinder; 71 - powder inlet cavity; 72 - vertical convex ring; 73 - discharge hole; 10 - driving mechanism.

### DETAILED DESCRIPTION

Specific embodiments of the present invention are described below with reference to the accompanying drawings.

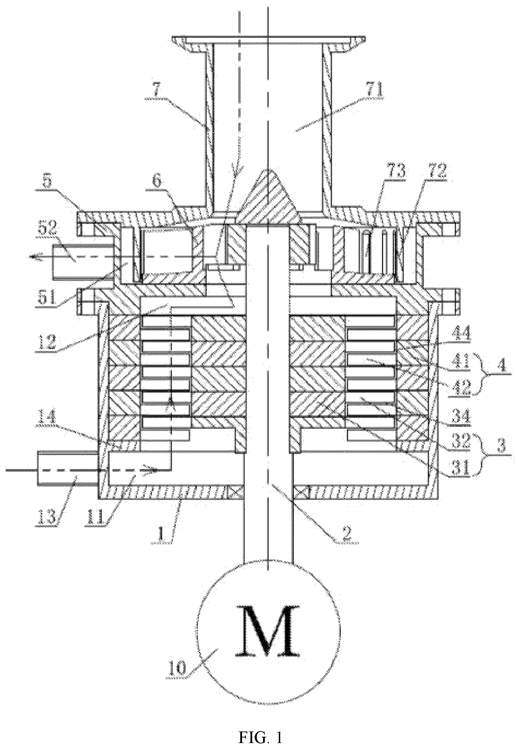

As shown in FIG. 1, in the present invention, one or more layers of dispersing rotor 3 and dispersing stator 4 are provided in a housing 1, the dispersing rotor 3 and the dispersing stator 4 are stacked in an axial direction, and the dispersing rotor 3 is rotatably fitted with the dispersing stator 4 to form a dispersing structure. The dispersing rotor 3 is sleeved on a main shaft 2, and the dispersing stator 4 is fixedly connected to the housing 1; a lower end portion of the main shaft 2 penetrates out of a bottom surface of the housing 1 and is connected with a driving mechanism 10, and the driving mechanism 10 drives the dispersing rotors 3 in one or more layers to rotate at a high speed through the main shaft 2. In the housing 1, a liquid inlet cavity 11 is located below the dispersing structure, and a liquid outlet cavity 12 is located above the dispersing structure; a wall surface of the housing 1 is provided with a liquid inlet 13 communicated with the liquid inlet cavity 11. A mixing sleeve 5 is connected to a top surface of the housing 1, a mixing cavity 51 is formed in the mixing sleeve 5, the mixing cavity 51 is communicated with the liquid outlet cavity 12, and a mixed material outlet 52 communicated with the mixing cavity 51 is formed in the mixing sleeve 5. A mixing impeller 6 is arranged in the mixing cavity 51 of the mixing sleeve 5, and the mixing impeller 6 is sleeved the main shaft 2 and is driven by the main shaft 2 to rotate at a high speed. A powder inlet cylinder 7 is connected to a top of the mixing sleeve 5, a powder inlet cavity 71 is arranged in the powder inlet cylinder 7, and the powder inlet cavity 71 is communicated with the mixing cavity 51.

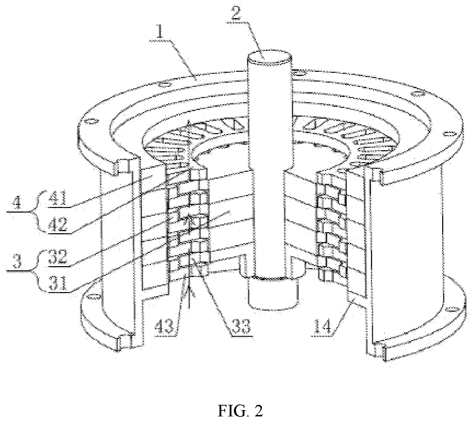

As shown in FIG. 1 and FIG. 2, a support ring 14 is provided on an inner wall surface of the housing 1 and protrudes inwards in a radial direction, the dispersing stator 4 in a bottommost layer abuts against the support ring 14, and the support ring 14 positions and supports the dispersing stators 4 to improve support strength.

The dispersing rotor 3 and the dispersing stator 4 are both of a disc-shaped structure.

The dispersing rotor 3 is a disc with a thick inner part and a thin outer part, and includes a thick rotor connecting ring 31 at the inner part and a thin rotor dispersing ring 32 at the outer part, and a plurality of rotor flow pass-through holes 33 are arranged in the rotor dispersing ring 32 in a circumferential direction. A thickness of the rotor dispersing ring 32 is about 1/10 to 9/10 of a thickness of the rotor connecting ring 31; the rotor dispersing ring 32 is formed to extend radially outwards from an upper half of an outer side edge of the rotor connecting ring 31, and a stator ring accommodating groove 34 is formed below the rotor dispersing ring 32 on an outer side of the rotor connecting ring 31.

The dispersing stator 4 is a disc with a thick outer part and a thin inner part, and includes a thick stator connecting ring 41 at the outer part and a thin stator dispersing ring 42 at the inner part, and a plurality of communicated stator flow pass-through holes 43 are formed in the stator dispersing ring 42 in a circumferential direction. A thickness of the stator dispersing ring 42 is about 1/10 to 9/10 of a thickness of the stator connecting ring 41; the stator dispersing ring 42 is formed to extend radially inwards from a lower half of an inner side edge of the stator connecting ring 41, and a rotor ring accommodating groove 44 is formed above the stator dispersing ring 42 on an inner side of the stator connecting ring 41. The thickness of the stator dispersing ring 42 is less than a depth of the stator ring accommodating groove 34, and the thickness of the rotor dispersing ring 32 is less than a depth of the rotor ring accommodating groove 44; the rotor dispersing ring 32 and the stator dispersing ring 42 are arranged at intervals in a fitted mode, the rotor dispersing ring 32 extends into the rotor ring accommodating groove 44, and the stator dispersing ring 42 extends into the stator ring accommodating groove 34. A radial width of the rotor dispersing ring 32 of the dispersing rotor 3 in each layer is consistent with a radial width of the stator dispersing ring 42 of the dispersing stator 4 in each layer, such that a dispersing area between the stators and the rotors can be utilized to the maximum extent to maximize an energy utilization rate.

As shown in FIG. 1, the flow pass-through holes of the dispersing rotor 3 and the dispersing stator 4 are communicated in the axial direction, and a liquid slurry sequentially flows through the flow pass-through holes of the dispersing rotor 3 and the dispersing stator 4 in each layer in the axial direction to be dispersed; in the dispersing structure, the liquid slurry only needs to flow in an axial flow channel from bottom to top without being diverted, thereby realizing a short flow distance, low flow resistance, smooth flowing, low flow loss, high efficiency, and low energy consumption of the slurry; in addition, when the slurry flows through the flow pass-through holes in the axial direction from bottom to top, flow rates and velocities at each portion of the flow pass-through holes are kept consistent, thereby ensuring the consistent dispersing effect of the dispersing areas, realizing more uniform dispersion and the better dispersing effect, and more helping to improve the energy utilization rate.

Each of the dispersing rotor 3 and the dispersing stator 4 is of a structure with the thick connecting ring and the thin dispersing ring; on the one hand, the thick connecting ring can improve connecting strength to make a connection more stable and reliable, and the thin dispersing ring is beneficial to reducing the flow resistance of the liquid slurry, thereby improving the efficiency and reducing the energy consumption; on the other hand, the dispersing rotor 3 and the dispersing stator 4 have the thick connecting rings and the thin dispersing rings, and the accommodating grooves for accommodating the dispersing rings are directly formed in outer sides or inner sides of the connecting rings of the dispersing rotor 3 and the dispersing stator 4, such that the dispersing rotor 3 or the dispersing stator 4 can abut layer by layer through the connecting rings of the thick parts, the dispersing rotor 3 in each layer are arranged on the inner sides of the dispersing stator 4 in the corresponding layer, and the accommodating grooves are not required to be defined through additional spacing rings, thus omitting the spacing rings, making the structure simpler and more compact, and also saving an element cost; the dispersing rotors 3 or the dispersing stators 4 abut layer by layer, which is also beneficial to improving the support strength to make the connection more stable and reliable.

As shown in FIG. 2 to FIG. 4, the rotor flow pass-through hole 33 of the dispersing rotor 3 and the stator flow pass-through hole 43 of the dispersing stator 4 are obround holes, such that radial areas of the rotor dispersing ring 32 and the stator dispersing ring 42 can be utilized as large as possible, so as to increase the flow pass-through area, improve the dispersing effect, and reduce the flow resistance.

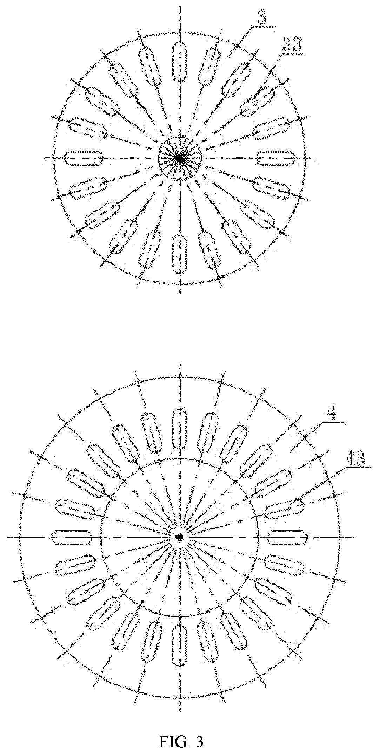

As shown in FIG. 3, all the rotor flow pass-through holes 33 of the dispersing rotor 3 and all the stator flow pass-through holes 43 of the dispersing stator 4 can be concentrically arranged, and the concentric arrangement can make the slurry stay for a longer time, which is more beneficial to dispersion; the rotor flow pass-through holes 33 and the stator flow pass-through holes 43 are radially extended and distributed, and an extension line of centers of circular arc portions on two sides of the rotor flow pass-through hole 33 or the stator flow pass-through hole 43 passes through a center of the dispersing rotor 3 or the dispersing stator 4.

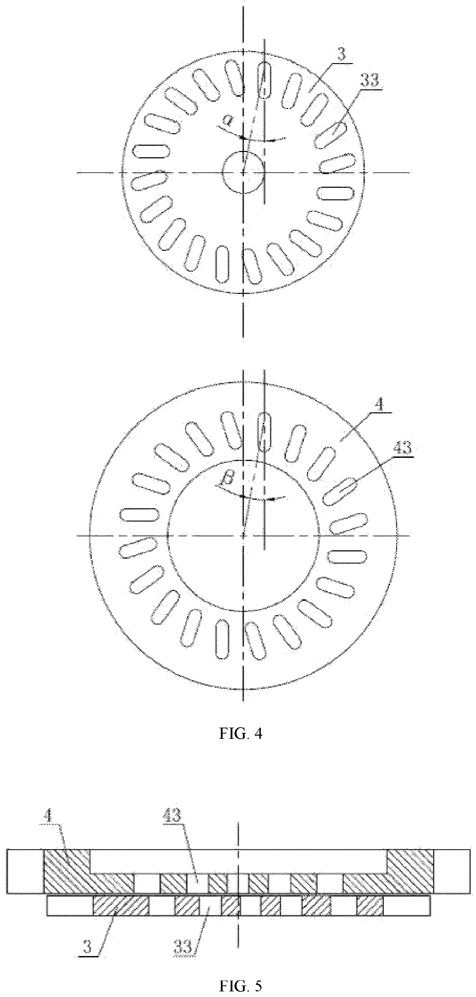

As shown in FIG. 4, all the rotor flow pass-through holes 33 of the dispersing rotor 3 and all the stator flow pass-through holes 43 of the dispersing stator 4 can also be eccentrically arranged, an eccentric direction is opposite to a rotating direction of the dispersing rotor 3, and the eccentric arrangement can improve a centrifugal force and a conveying flow rate, which is beneficial to improving the efficiency; the extension line of centers of the circular arc portions on the two sides of the rotor flow pass-through hole 33 or the stator flow pass-through hole 43 does not pass through the center of the dispersing rotor 3 or the dispersing stator 4. An included angle α between the extension line of centers of the circular arc portions on the two sides of the rotor flow pass-through hole 33 and a radial line passing through a center of the circular arc portion on an outer side thereof ranges from 0 degrees to 90 degrees. An included angle β between the extension line of centers of the circular arc portions on the two sides of the stator flow pass-through hole 43 and a radial line passing through a center of the circular arc portion on an outer side thereof ranges from 0 degrees to 90 degrees.

The rotor flow pass-through hole 33 of the dispersing rotor 3 and the stator flow pass-through hole 43 of the dispersing stator 4 can be concentrically arranged or eccentrically arranged at the same time, or one of the rotor flow pass-through hole and the stator flow pass-through hole is concentrically arranged and the other of the rotor flow pass-through hole and the stator flow pass-through hole is eccentrically arranged.

As shown in FIG. 5, the rotor flow pass-through hole 33 of the dispersing rotor 3 and the stator flow pass-through hole 43 of the dispersing stator 4 can be straight holes, resulting in a smaller flow resistance.

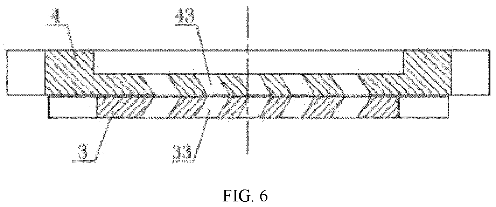

As shown in FIG. 6, the rotor flow pass-through hole 33 of the dispersing rotor 3 and the stator flow pass-through hole 43 of the dispersing stator 4 can also be inclined holes, inclination directions of the rotor flow pass-through hole 33 and the stator flow pass-through hole 43 are opposite, and fitting sections of the rotor flow pass-through hole 33 and the stator flow pass-through hole 43 are in a V shape, resulting in a better shearing dispersing effect.

The rotor flow pass-through hole 33 and the stator flow pass-through hole 43 may be configured as straight holes or inclined holes at the same time, or one of the rotor flow pass-through hole 33 and the stator flow pass-through hole 43 is configured as a straight hole and the other of the rotor flow pass-through hole 33 and the stator flow pass-through hole 43 is configured as an inclined hole.

As shown in FIG. 1, a vertical convex ring 72 is provided on a bottom surface of the powder inlet cylinder 7 and extends vertically downwards along the axial direction, and a plurality of discharge holes 73 are formed in a wall surface of the vertical convex ring 72. The vertical convex ring 72 sleeves the mixing impeller 6, such that the liquid slurry and powder can be blocked on an inner side of the vertical convex ring, are stirred and mixed by the rotating mixing impeller 6 and then flow out through the discharge hole 73, resulting in more sufficient mixing and a better mixing effect.

During practical use of the present invention, the driving mechanism 10 drives the dispersing rotor 3 in one or more layers and the mixing impeller 6 to rotate at the high speed through the main shaft 2; the liquid slurry enters the liquid inlet cavity 11 from the liquid inlet 13, sequentially flows through the dispersing rotor 3 and the dispersing stator 4 in the one or more layers along the axial direction, is dispersed, then enters the liquid outlet cavity 12, and then flows to the mixing cavity 51 from the liquid outlet cavity 12; the powder is conveyed to the mixing cavity 51 from the powder inlet cylinder 7; the liquid slurry and the powder are uniformly mixed in the mixing cavity 51 by the mixing impeller 6 and then are output from the mixed material outlet 52.

The above description is the interpretation of the invention, and not the limitation of the invention, and the invention can be modified in any form without violating the spirit of the invention. For example, in other embodiments, the rotor dispersing ring 32 of the dispersing rotor 3 may be provided on a lower half of the outer side of the rotor connecting ring 31, and the stator dispersing ring 42 of the corresponding dispersing stator 4 may be provided on an upper half of the inner side of the stator connecting ring 41.

## Claims

1. A multilayer series axial-flow type slurry dispersing device, comprising a housing (1), is **characterized in that**, one or more layers of dispersing rotor (3) and dispersing stator (4) are arranged in the housing (1), the dispersing rotor (3) and the dispersing stator (4) are stacked in an axial direction, the dispersing rotor (3) is sleeved on a main shaft (2), the dispersing stator (4) is connected to the housing (1), and the dispersing rotor (3) is rotatably fitted with the dispersing stator (4); is **characterized in that**, the dispersing rotor (3) has a thick inner part and a thin outer part and comprises a rotor connecting ring (31) at the thick inner part and a rotor dispersing ring (32) at the thin outer part, a stator ring accommodating groove (34) is formed in an outer side of the rotor connecting ring (31) and above or below the rotor dispersing ring (32), and one or more rotor flow pass-through holes (33) are formed in the rotor dispersing ring (32); the dispersing stator (4) has a thick outer part and a thin inner part and comprises a stator connecting ring (41) at the thick outer part and a stator dispersing ring (42) at the thin inner part, a rotor ring accommodating groove (44) is formed in an inner side of the stator connecting ring (41) and below or above the stator dispersing ring (42), and one or more stator flow pass-through holes (43) are formed in the stator dispersing ring (42); the rotor dispersing ring (32) and the stator dispersing ring (42) are spaced apart, the rotor dispersing ring (32) extends into the rotor ring accommodating groove (44), and the stator dispersing ring (42) extends into the stator ring accommodating groove (34).

2. The multilayer series axial-flow type slurry dispersing device as claimed in claim 1, is **characterized in that**, the dispersing rotors (3) or the dispersing stators (4) abut layer by layer, and the dispersing rotor (3) in each layer are arranged on inner side of the dispersing stator (4) in a corresponding layer; a thickness of the stator dispersing ring (42) is less than a depth of the stator ring accommodating groove (34), and a thickness of the rotor dispersing ring (32) is less than a depth of the rotor ring accommodating groove (44).

3. The multilayer series axial-flow type slurry dispersing device as claimed in claim 1, is **characterized in that**, a radial width of the rotor dispersing ring (32) is consistent with a radial width of the stator dispersing ring (42); a thickness of the rotor dispersing ring (32) is about 1/10 to 9/10 of a thickness of the rotor connecting ring (31); a thickness of the stator dispersing ring (42) is about 1/10 to 9/10 of a thickness of the stator connecting ring (41).

4. The multilayer series axial-flow type slurry dispersing device as claimed in claim 1, is **characterized in that**, the rotor flow pass-through holes (33) and the stator flow pass-through holes (43) are obround holes; all the rotor flow pass-through holes (33) and/or all the stator flow pass-through holes (43) are arranged concentrically or eccentrically.

5. The multilayer series axial-flow type slurry dispersing device as claimed in claim 4, is **characterized in that**, an included angle α between an extension line of centers of circular arc portions on two sides of each rotor flow pass-through hole (33) and a radial line passing through a center of the circular arc portion on an outer side thereof ranges from 0 degrees to 90 degrees; an included angle β between an extension line of centers of circular arc portions on two sides of each stator flow pass-through hole (43) and a radial line passing through a center of the circular arc portion on an outer side thereof ranges from 0 degrees to 90 degrees.

6. The multilayer series axial-flow type slurry dispersing device as claimed in claim 1, is **characterized in that**, the rotor flow pass-through holes (33) and/or the stator flow pass-through holes (43) are configured as straight holes or inclined holes.

7. The multilayer series axial-flow type slurry dispersing device as claimed in claim 1, is **characterized in that**, an inner wall surface of the housing (1) is provided with a support ring (14), and one dispersing stator (4) in a bottommost layer abuts against the support ring (14).

8. The multilayer series axial-flow type slurry dispersing device as claimed in claim 1, is **characterized in that**, a liquid inlet cavity (11) is arranged in a bottom in the housing (1), a liquid outlet cavity (12) is arranged in a top in the housing (1), and a liquid inlet (13) communicated with the liquid inlet cavity (11) is arranged on a wall surface of the housing (1).

9. A powder-liquid mixing device, is **characterized in that**, the powder-liquid mixing device comprises the multilayer series axial-flow type slurry dispersing device as claimed in claim 1, a mixing sleeve (5) is connected to a top surface of the housing (1), a mixing cavity (51) is arranged in the mixing sleeve (5), the mixing cavity (51) is communicated with a liquid outlet cavity (12), a mixed material outlet (52) communicated with the mixing cavity (51) is arranged in the mixing sleeve (5), a mixing impeller (6) is arranged in the mixing cavity (51) of the mixing sleeve (5), the mixing impeller (6) is sleeved on the main shaft (2), a powder inlet cylinder (7) is connected to a top of the mixing sleeve (5), a powder inlet cavity (71) is arranged in the powder inlet cylinder (7), and the powder inlet cavity (71) is communicated with the mixing cavity (51).

10. The powder-liquid mixing device as claimed in claim 9, is **characterized in that**, a vertical convex ring (71) is arranged on a bottom surface of the powder inlet cylinder (7), one or more discharge holes (73) are arranged in a wall surface of the vertical convex ring (72), and the vertical convex ring (72) is sleeved on the mixing impeller (6).
